# EUROPEAN PATENT SPECIFICATION

(11) **EP 4 473 069 B1**
(45) Date of publication and mention of the grant of the patent: **18.06.2025**
(21) Application number: 22716309.4
(22) Date of filing: 21.03.2022
(51) Int. Cl.: C09D 183/04

(54) **A COMPOSITION**
EINE ZUSAMMENSETZUNG
UNE COMPOSITION

(43) Date of publication of application: 11.12.2024
(73) Proprietor: Wacker Chemie AG, 81671 München (DE)
(72) Inventor: WANG, Yihua, Shanghai 200233 (CN)
(74) Representative: Wimmer, Andreas
(86) International application number: PCT/CN2022/081989
(87) International publication number: WO 2023/178473

(56) References cited:
- WO-A1-2019/090456
- CN-A- 111 607 358
- CN-B- 104 583 277
- CN-B- 110 551 450

## Description

### Technical field

The present invention relates to the technical field of building materials and is especially related to the field of water proofing.

### Background Technology

CN111417692A Ex.1 discloses a coating composition containing alkoxy silicone resin, hydroxy silicone oil with viscosity below 1000 mPa·s, aminosilane and optionally silane-modified polyether. The coatings obtained after curing of this composition have excellent anti-graffiti and anti-stick properties.

CN104583277B discloses a sealant composition, which contains silane-modified polyether (A) and silicone resin (B), wherein the weight ratio of silicone resin (B) to silane-modified polyether (A) is between 0.3-10, preferably between 0.6-5, more preferably between 0.8-3, a typical weight ratio is 1.56.

CN111607358A discloses a waterproof composition, which contains silane-modified polyether, silicone resin, hexadecyltrimethoxysilane, vinyltrimethoxysilane, etc., wherein the weight ratio of silicone resin to silane-modified polyether is 0.83. CN 1105514508 discloses brightening agent for decorative stone modification application, is prepared using polyacrylate polymer and modified polydimethylsiloxane and modified polyether modified using aminoalkoxysilane.

### Invention Description

The invention discloses a composition, which has the advantages of low viscosity and excellent workability. The composition could be coated on the surface of tiles. After curing, a coating with high transparency, high hardness, low water absorption and long durability can be obtained.

The present invention relates to a composition (M), which contains

Component (A) silane-crosslinking polymer,
Optional component (C) an organosilicon compound that not having nitrogen atoms bonded directly to carbonyl groups,
component (E) silicone resin,
wherein, the weight ratio of component (E) silicone resin to component (A) silane-crosslinking polymer is greater than or equal to 3.2, preferably greater than or equal to 3.3, more preferably between 3.3-4.8, such as 3.4, 3.6, 3.8, 4.0, 4.2, 4.4, 4.6, the dosage of the hydroxy silicone oil is less than 1 wt%, preferably less than 0.1 wt%, based on the total amount of the compositions (M) is calculated as 100wt%.

The composition (M) as described above, wherein the hydroxysilicone oil has the following general structural formula (IV): 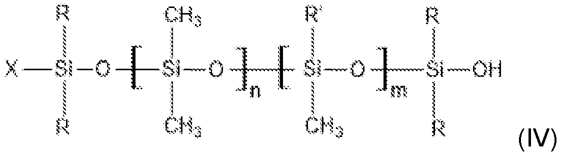
in formula (IV), R and R' are alkyl or aryl independently; preferably C1-C20 alkyl, more preferably methyl, ethyl, propyl, octyl, dodecyl;
X is selected from hydroxy, alkoxy, hydrogen, halogen, alkyl, aryl or alkenyl; preferably hydroxyl, alkoxy, more preferably hydroxyl, methoxy, ethoxy;
and n is an integer greater than 0, m is an integer including 0;
the kinematic viscosity of the hydroxy silicone oil at 25°C is below 1000 mPa·s.

The composition (M) as described above, its viscosity is less than or equal to 5000 mPa.s, preferably less than or equal to 3000 mPa.s, more preferably less than or equal to 2000 mPa.s, more preferably less than or equal to 1000 mPa.s, more preferably less than or equal to 500 mPa.s, for example, 1500 mPa.s, 1300 mPa.s, 1100 mPa.s, 900 mPa.s, 700 mPa.s. The kinematic and static viscosities of the compositions of the present invention are measured by using an Anton Paar MCR302 instrument according to DIN 53019, at 25°C.

The composition (M) as described above, which is visually transparent before curing.

The composition (M) as described above, which has a turbidity between 0 and 100, preferably between 0 and 70, preferably between 0 and 50, measured according to the method of EPA No. 180.1.

### Determination of Turbidity NTU

Reference standard: US Environmental Protection Agency (USEPA) Method 180.1
Equipment used: HACH 1900C (purchased from HACH USA)
Determination method: under the condition of 25 °C, directly put the sample into the measuring cell for measurement, and read the corresponding value.

The composition (M) as described above, the cured coating of 300um thickness was visually clear.

The composition (M) as described above, wherein the filler content of component (D) is less than 1 wt%, preferably less than 0.1 wt%, based on the total amount of the compositions (M) is calculated as 100wt%.

The composition (M) as described above, wherein the amount of component (A) silane-crosslinking polymer is 10-50wt%, preferably 10-40wt%, more preferably 10-30wt%, more preferably 15-25wt%; based on the total amount of the compositions (M) is calculated as 100wt%.

The composition (M) as described above, wherein the sum of the amount of component (A) silane-crosslinking polymer and component (E) silicone resin is greater than 80wt%, preferably between 85 and 99wt%, more preferably between 88 and 96wt%, for example 90wt%, 92wt%, 94wt%, 95wt%, based on the total amount of the compositions (M) is calculated as 100wt%.

The composition (M) as described above, wherein the sum of the amounts of component (A) silane-crosslinking polymer, component (E) silicone resin, and component (C) an organosilicon compound that not having nitrogen atoms bonded directly to carbonyl groups is greater than 80wt%, preferably between 85 and 99.5 wt%, more preferably between 88 and 99.5wt%, for example 90wt%, 92wt%, 94wt%, 96wt%, 98wt%, 99wt%, the total amount of all compositions (M) is calculated as 100wt%.

The composition (M) as described above, wherein dosage of component (E) silicone resin is greater than 50wt%, preferably between 55 and 90 wt%, more preferably between 60 and 85wt%, more preferably between 65 and 80wt%, more preferably between 65 and 75wt%, for example 67wt%, 69wt%, 71wt%, 73wt%, 74wt%, the total amount of all compositions (M) is calculated as 100wt%.

The composition (M) as described above contains
15-25% by weight of the component (A) silane-crosslinking polymer,
50-85% by weight of the component (E) silicone resin,
and the total amount of all the compositions (M) is calculated as 100wt%.

The composition (M) as described above contains
10-25 parts Component (A) silane-crosslinking polymer,
0.1-10 parts Component (C) An organosilicon compound that not having nitrogen atoms bonded directly to carbonyl groups,
65-89 parts component (E) silicone resin,
the total amount of all compositions (M) is calculated as 100 parts.

The composition (M) as described above contains
15-25 parts Component (A) silane-crosslinking polymer,
0.5-5 parts Component (C) An organosilicon compound that not having nitrogen atoms bonded directly to carbonyl groups,
70-84 parts component (E) silicone resin,
the total amount of all compositions (M) is calculated as 100 parts.

For the composition (M) as described above, after curing at room temperature, its Shore D hardness is greater than or equal to 35, preferably between 35 and 80, more preferably between 40 and 60, such as 42, 45, 48, 52, 55.

The composition (M) as described above, wherein the content of polyacrylamide is less than or equal to 1 wt%, preferably less than or equal to 0.1 wt%, calculated based on the composition (M) as 100 wt%.

The composition (M) as described above, wherein the content of silicate is less than or equal to 1 wt%, preferably less than or equal to 0.1 wt%, calculated based on the composition (M) as 100 wt%.

The composition (M) as described above, wherein the content of epoxy resin is less than or equal to 1 wt %, preferably less than or equal to 0.1 wt %, calculated based on the composition (M) as 100 wt %.

The composition (M) as described above, wherein the content of polyurethane is less than or equal to 1 wt %, preferably less than or equal to 0.1 wt %, calculated based on the composition (M) as 100 wt %.

Use of the composition (M) as described above in the field of construction, preferably in the field of concrete, natural stone, artificial stone, brick or tile protecting, more preferably in the waterproofing coating field of brick or tile, preferably in the waterproofing coating field of decorative brick or tile, more preferably in the waterproofing coating field of bricks or tiles with glazed or porcelain surfaces.

Use of the composition (M) as described above in the field of indoor waterproofing and/or roof waterproofing.

A method of construction, containing the steps of applying the composition (M) as described above on the surfaces and/or gaps of already laid bricks or tiles.

The construction method as described above, the thickness of the cured composition (M) is between 100-500 µm, more preferably between 150-350 µm, preferably between 200-300 µm.

The construction method as described above, without the operation step of destroying the already laid bricks or tiles.

Construction methods as described above, including injection, scraping, brushing, rolling, dipping, and spraying.

### In the present invention,

Ceramic bricks have pottery bodies, sides, and upper and lower surfaces, and the water absorption rate is much higher than 0.5wt%.

Ceramic glazed tiles, the embryonic body, side and lower surface are all pottery, the upper surface is glazed, and the water absorption rate is generally higher than 0.5wt%.

Porcelain glazed tiles, the embryonic body, sides and lower surface are all porcelain, the upper surface is glazed or porcelain, and the water absorption rate is generally less than 0.5%.

Pottery products contain coarser-grained clay as the main raw material, with higher porosity, and the firing temperature is generally lower than that of porcelain products.

Porcelain products contain fine-grained kaolin as the main raw material, with low porosity, and the firing temperature is generally between 1200 and 1400°C.

Glaze describes the often shiny, wear-protective layer of oxide formed on the pottery or porcelain at high temperature in an oxygen-containing atmosphere. The layer forms on the surfaces and can protect against wear.

The composition (M) described above, which contains component (A) silane-crosslinking polymers of the formula (1-1)

(HO)ₓ-Y-[O-CO-NH-(CR¹₂)_{b1}-SiRₐ(OR²)₃₋ₐ]₂₋ₓ (I-1)

wherein
Y is a divalent polymer radical,
R may be the same or different and is a monovalent, optionally substituted hydrocarbyl radical,
R¹ may be the same or different and is a hydrogen atom or a monovalent, optionally substituted hydrocarbyl radical,
R² may be the same or different and is a hydrogen atom or a monovalent, optionally substituted hydrocarbyl radical,
x is 0 or 1,
a may be the same or different and is 0, 1 or 2, preferably 0 or 1, more preferably 1, and
b1 is 1 or 3, preferably 1,
with the proviso that component (A) includes less than 15 mol %, preferably less than 10 mol %, more preferably less than 5 mol %, of polymers of the formula (1-1) with x=1.

In Formula (1-1), examples of R radicals are each independently alkyl radicals such as the methyl, ethyl, n-propyl, isopropyl, 1-n-butyl, 2-n-butyl, isobutyl, tert-butyl, n-pentyl, isopentyl, neopentyl, tert-pentyl radical; hexyl radicals such as the n-hexyl radical; heptyl radicals such as the n-heptyl radical; octyl radicals such as the n-octyl radical, isooctyl radicals and the 2,2,4-trimethylpentyl radical; nonyl radicals such as the n-nonyl radical; decyl radicals such as the n-decyl radical; dodecyl radicals such as the n-dodecyl radical; octadecyl radicals such as the n-octadecyl radical; cycloalkyl radicals such as the cyclopentyl, cyclohexyl, cycloheptyl radical and methylcyclohexyl radicals; alkenyl radicals such as the vinyl, 1-propenyl and 2-propenyl radical; aryl radicals such as the phenyl, naphthyl, anthryl and phenanthryl radical; alkaryl radicals such as o-, m-, p-tolyl radicals; xylyl radicals and ethylphenyl radicals; and aralkyl radicals such as the benzyl radical and the α- and β-phenylethyl radicals.

In Formula (1-1), examples of substituted R radicals are independently haloalkyl radicals such as the 3,3,3-trifluoro-n-propyl radical, the 2,2,2,2',2',2'-hexafluoroisopropyl radical and the heptafluoroisopropyl radical, and haloaryl radicals such as the o-, m- and p-chlorophenyl radical.

Preferably, the R radicals are each independently monovalent hydrocarbyl radicals optionally substituted by halogen atoms and having 1 to 6 carbon atoms, more preferably alkyl radicals having 1 or 2 carbon atoms, especially the methyl radical.

In Formula (1-1), examples of R¹ radicals are each independently a hydrogen atom, or the radicals specified for R.

Preferably, the R¹ radicals are each independently a hydrogen atom or a hydrocarbyl radical having 1 to 20 carbon atoms, especially a hydrogen atom.

In Formula (1-1), examples of R² radicals are independently a hydrogen atom or the examples given for the R radical.

Preferably, the R² radicals are each independently a hydrogen atom or an alkyl radical optionally substituted by halogen atoms and having 1 to 10 carbon atoms, more preferably an alkyl radical having 1 to 4 carbon atoms, especially the methyl or ethyl radical.

In Formula (1-1), examples of polymer radicals Y are independently polyester, polyether, polyurethane, polyalkylene and polyacrylate radicals.

The polymer radicals Y are preferably each independently organic polymer radicals containing, as a polymer chain, polyoxyalkylene such as polyoxyethylene, polyoxypropylene, polyoxybutylene, polyoxytetramethylene, polyoxyethylene-polyoxypropylene copolymer and polyoxypropylene-polyoxybutylene copolymer; hydrocarbon polymers such as polyisobutylene and copolymers of polyisobutylene with isoprene; polychloroprenes; polyisoprenes; polyurethanes; polyesters; polyamides; polyacrylates; polymethacrylates; vinyl polymer and/or polycarbonates.

More preferably, the Y radicals are each polyoxyalkylene radicals, more preferably linear polyoxyalkylene radicals.

The polymers of the formula (1-1) used in accordance with the invention are preferably prepared by reacting polymers of the formula

HO-Y-OH (V)

with silanes of the formula

OCN-(CR¹₂)_{b1}-SiRₐ(OR²)₃₋ₐ (VI-1)

where all the radicals and indices have one of the definitions according to formula (I-1). What is crucial is that this reaction achieves substantially complete termination of the chain ends present.

In the invention, the polymer systems in which virtually all the OH functions have been substantially completely terminated with isocyanate-functional silanes of the formulae (VI-1) have better curable properties.

Suitable processes for preparing a corresponding component (A) and also examples of component (A) itself are described, inter alia, in EP 1 535 940 B1 (paragraphs [0005]-[0025] and examples 1-3 and comparative examples 1-4) or EP 1 896 523 B1 (paragraphs [0008]-[0047]),.

The compounds (A) used in accordance with the invention may be prepared separately and not mixed with one another until the provision of the compositions (M) of the invention. However, they can also be prepared together by reacting a mixture of polyols of the formulae (V) together with isocyanate-functional silanes of the formulae (VI-1).

The mean molecular weights Mₙ of the compounds (A) is at least 5,000 g/mol, preferably at least 10,000 g/mol, more preferably at least 11,000 g/mol, and preferably at most 30,000 g/mol, more preferably at most 24,000 g/mol and especially at most 22,000 g/mol.

The number-average molar mass Mₙ was determined by means of size exclusion chromatography (SEC) against a polystyrene standard, in THF, at 60° C., flow rate 1.2 mL/min and RI detection (refractive index detector) on a Styragel HR3-HR4-HR5-HR5 column set from Waters Corp. USA with an injection volume of 100 µl.

The viscosity of components (A) is preferably at least 0.2 Pas, more preferably at least 1 Pas, and most preferably at least 5 Pas, and preferably at most 700 Pas, more preferably at most 100 Pas.

The components (A) used in accordance with the invention may contain just one type of compound of the formula (1-1), or else mixtures of different types of compounds of the formula (1-1).

For example,
the silane end groups in the component (A1) is b1=1, R¹=H and a=1, and
the silane end groups in the component (A2) is b1=3, R¹=H and a=0;

In a particular embodiment, the compositions (M1) of the invention contain polymers (A1) in which, in at least 70% of all the silane end groups, preferably in at least 90% of all the silane end groups, b1= 1, R¹ = H and a = 1, and component (E) silicone resin.

In a further particular embodiment, the compositions (M2) of the invention contain polymers (A2) in which, in at least 70% of all the silane end groups, preferably in at least 90% of all the silane end groups, b1=3, R¹=H and a=0, and component (E) silicone resin.

The compositions (M) of the invention may comprise, in addition to components (A1)/(A2), component (E) silicone resin, further substances, for example (C) organosilicon compounds not having nitrogen atoms bonded directly to carbonyl groups, (H) water scavengers, and (J) additives.

The organosilicon compounds (C) not having nitrogen atoms bonded directly to carbonyl groups which are optionally present in the compositions (M) of the invention are preferably organosilicon compounds containing units of the formula

DₑSi(OR⁷)_{f}R⁸ _{g}O_{(4-e-f-g)/2} (III)

in which
R⁷ may be the same or different and is a hydrogen atom or optionally substituted hydrocarbyl radicals,
D may be the same or different and is a monovalent, SiC-bonded radical not having nitrogen atoms bonded directly to a carbonyl group,
R⁸ may be the same or different and is a monovalent, optionally substituted, SiC-bonded, nitrogen-free organic radical,
e is 0, 1, 2, 3 or 4, preferably 1,
f is 0, 1, 2 or 3, preferably 1, 2 or 3, more preferably 2 or 3, and
g is 0, 1, 2 or 3, preferably 1 or 0,
with the proviso that the sum total of e+f+g is less than or equal to 4 and at least one D radical is present per molecule.

The organosilicon compounds (C) used in accordance with the invention may be either silanes, i.e. compounds with e+f+g=4, or siloxanes, i.e. compounds containing units with e+f+g≤3, preferably silanes.

Examples of optionally substituted hydrocarbyl radicals R⁷ are the examples given for the R radical.

The R⁷ radicals are preferably a hydrogen atom or a hydrocarbyl radical optionally substituted by halogen atoms and having 1 to 18 carbon atoms, more preferably a hydrogen atom or a hydrocarbyl radical having 1 to 10 carbon atoms, especially the methyl or ethyl radical.

Examples of the R⁸ radical are the examples given for R.

The R⁸ radical preferably comprises hydrocarbyl radicals optionally substituted by halogen atoms and having 1 to 18 carbon atoms, more preferably hydrocarbyl radicals having 1 to 5 carbon atoms, especially the methyl radical.

Preferably, D radicals are radicals selected from H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, phenyl-NH(CH₂)₃-, (CH₃)₂N(CH₂)₃-, (C₂H₁₅)₂N(CH₂)₃-, (C₃H₇)₂N(CH₂)₃-, (C₄H₉)₂N(CH₂)₃, (C₅H₁₁)₂N(CH₂)₃, (C₆H₁₃)₂N(CH₂)₃, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, phenyl-NH(CH₂)-, (CH₃)₂N(CH₂)-, (C₂H₅)₂N(CH₂)-, (C₃H₇)₂N(CH₂)-, (C₄H₉)₂N(CH₂)-, (C₅H₁₁)₂N(CH₂)-, (C₆H₁₃)₂N(CH₂)-, (C₇H₁₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- and (C₂H₅O)₂(CH₃)Si(CH₂)₃NH(CH₂)₃-, and also reaction products of the abovementioned primary amino groups with compounds having epoxy groups or double bonds reactive toward primary amino groups. Preferably, the D radical is the H₂N(CH₂)₃-, H₂N(CH₂)₂NH(CH₂)₃- or cyclo-C₆H₁₁NH(CH₂)₃- radical.

Preferably, the silanes of the formula (III) used in accordance with the invention are selected from H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-CH₁₁NH(CH₂)₃-Si(OC₂H₅)₃, cyclo-C₆H₁₁NH(CH₂)₃-Si(OCH₃)₂CH₃, cyclo-CH₁₁NH(CH₂)₃-Si(OC₂H₅)₂CH₃, phenyl-NH(CH₂)₃-Si(OCH₃)₃, phenyl-NH(CH₂)₃-Si(OC₂H₅)₃, phenyl-NH(CH₂)₃-Si(OCH₃)₂CH₃, phenyl-NH(CH₂)₃-Si(OC₂H₅)₂CH₃, HN((CH₂)₃-Si(OCH₃)₃)₂, HN((CH₂)₃-Si(OC₂H)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-CH₁₁NH(CH₂)-Si(OCH₃)₂CH₃, cyclo-C₆H₁₁NH(CH₂)-Si(OC₂H₅)₂CH₃, phenyl-NH(CH₂)-Si(OCH₃)₃, phenyl-NH(CH₂)-Si(OC₂H₅)₃, phenyl-NH(CH₂)-Si(OCH₃)₂CH₃, phenyl-NH(CH₂)-Si(OC₂H₅)₂CH₃, and also the partial hydrolyzates thereof, preference being given to H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-CH₁₁NH(CH₂)₃-Si(OC₂H₅)₃ and cyclo-CH₁₁NH(CH₂)₃-Si(OCH₃)₂CH₃ and the partial hydrolyzates of each, and particular preference to H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-CH₁₁NH(CH₂)₃-Si(OCH₃)₂CH₃ and the partial hydrolyzates of each.

The organosilicon compounds (C) optionally used in accordance with the invention may also assume the function of a curing catalyst or cocatalyst in the compositions (M) of the invention.

In addition, the organosilicon compounds (C) optionally used in accordance with the invention may act as adhesion promoters and/or as water scavengers.

The organosilicon compounds (C) optionally used in accordance with the invention are commercial products or are preparable by the standard chemical methods.

If the compositions (M) of the invention contain component (C), amounts thereof are preferably 0.01 to 25 parts by weight, more preferably 2 to 10 parts by weight, and especially 3 to 7 parts by weight, based on 100 parts by weight of components (A) in each case. The compositions (M) of the invention preferably contain component (C).

The fillers (D) in the compositions (M) of the invention may be any desired fillers known to date.

Examples of fillers (D) include (D1) non-reinforcing fillers, i.e. fillers having a BET surface area of preferably up to 50 m²/g, such as quartz, diatomaceous earth, calcium silicate, zirconium silicate, talc, kaolin, zeolites, metal oxide powders, such as aluminum oxides, titanium oxides, iron oxides or zinc oxides, or the mixed oxides thereof, barium sulfate, precipitated and/or ground chalk which may be either coated or uncoated, gypsum, silicon nitride, silicon carbide, boron nitride, glass and polymer powder, such as polyacrylonitrile powder; and (D2) reinforcing fillers, i.e. fillers having a BET surface area of more than 50 m²/g, such as fumed silica, precipitated silica, precipitated chalk, carbon black, such as furnace black and acetylene black, and mixed silicon-aluminum oxides of high BET surface area; aluminum trihydroxide, fillers in the form of hollow spheres, such as ceramic microbeads, for example those obtainable under the Zeeospheres^{™} trade name from 3M Deutschland GmbH in Neuss, Germany, elastic polymer beads, for example those obtainable under the EXPANCEL^{®} trade name from AKZO NOBEL, Expancel in Sundsvall, Sweden, or glass beads; fibrous fillers, such as asbestos and polymer fibers. The fillers mentioned may be hydrophobized, for example by treatment with organosilanes or -siloxanes or with stearic acid, or by etherification of hydroxyl groups to alkoxy groups.

The fillers (D) are ground and/or precipitated chalk which may be either coated or uncoated, talc, aluminum trihydroxide and silica, particular preference being given to calcium carbonate and aluminum trihydroxide. Preferred calcium carbonate types are ground or precipitated calcium carbonate, optionally surface-treated with fatty acids such as stearic acid or salts thereof. The preferred silica is preferably fumed silica.

The fillers (D) preferably have a moisture content of preferably less than 1% by weight, more preferably less than 0.5% by weight.

Any silicone resins (E) present in the compositions (M) of the invention containing in formula (II):

R³_{c}(R⁴O)_{d}SiO_{(4-c-d)/2} (II)

wherein
R³ can be the same or different, and represents a hydrogen atom or an optionally substituted monovalent hydrocarbon group bonded with SiC,
R⁴ may be the same or different and represents a hydrogen atom or an optionally substituted monovalent hydrocarbon group,
c is 0, 1, 2 or 3, and
d is 0, 1, 2 or 3,
wherein the sum of c+d is less than or equal to 3; and c is equal to 0 or 1 in at least 50wt%, preferably 70wt%, more preferably 90wt% of the units of formula (II).

The silicone resin (E) preferably contains at least 95% by weight of units of formula (II). It is particularly preferred that the silicone resin (E) consists only of the unit of formula (II).

In formula (II), Examples of radicals R³ are the examples specified above for R in formula (1-1).

Radical R³ preferably comprises monovalent, SiC-bonded aliphatic or aromatic hydrocarbon radicals which are optionally substituted by halogen atoms and which have 1 to 18 carbon atoms, more preferably the methyl or phenyl radical. In particular, all radicals R³ are exclusively methyl and phenyl radicals.

In formula (II), Examples of radical R⁴ are hydrogen atom or the examples specified for radical R in formula (1-1).

Radical R⁴ preferably comprises hydrogen atom or alkyl radicals having 1 to 10 carbon atoms that are optionally substituted by halogen atoms, more preferably hydrogen atom or alkyl radicals having 1 to 4 carbon atoms, more preferably the methyl, ethyl, or butyl radical, most preferably the methyl radical.

Phenylsilicone resins are used with preference as resins (E). Most preferably, the phenylsilicone resins (E) consist exclusively of units of the formula (II) in which at least 10%, preferably at least 50%, more preferably at least 60% of all units of the formula (II) have at least one SiC-bonded phenyl group.

Employed with preference are silicone resins (E) in which c+d is less than 3.

In one embodiment, phenylsilicone resins (E) are used which contain, based on the total number of units of the formula (II) in each case, at least 50%, more preferably at least 60%, of units of the formula (II) in which c is 1.

In one preferred embodiment, silicone resins (E) are used which have exclusively units of the formula (II) in which c is 0, 1, or 2, with the proviso that c is equal to 0 or 1 in at least 50% of the units of the formula (II).

In one preferred embodiment, silicone resins (E) are used which have exclusively units of the formula (II) in which c is 1 or 2.

In one specific embodiment, silicone resins (E) are used which have exclusively units of the formula (II) in which c is 1.

Preference is given to using silicone resins (E) which have, based on the total number of units of the formula (II) in each case, at least 70%, more preferably at least 80%, of units of the formula (II) in which d is 0 or 1.

Preference is given to using silicone resins (E) which, based on the total number of units of the formula (II) in each case, have 30% to 95%, more preferably 30% to 90%, of units of the formula (II) in which d is 0.

Examples of silicone resins (E) are organopolysiloxane resins which consist substantially, preferably exclusively, of (Q) units of the formulae SiO_{4/2}, Si(OR⁴)O_{3/2}, Si(OR⁴)₂O_{2/2}, and Si(OR⁴)₃O_{1/2}, (T) units of the formulae PhSiO_{3/2}, PhSi(OR⁴)O_{2/2}, and PhSi(OR⁴)₂O_{1/2}, (D) units of the formulae Me₂SiO_{2/2} and Me₂Si(OR⁴)O_{1/2}, and also (M) units of the formula Me₃SiO_{1/2}, where Me is the methyl radical, Ph is the phenyl radical, and R⁴ is the methyl, ethyl, or butyl radical, preferably the methyl radical, with the resin containing preferably 0-2 mol of (Q) units, 0-2 mol of (D) units, and 0-2 mol of (M) units per mol of (T) units.

Preferred examples of silicone resins (E) are organopolysiloxane resins which consist substantially, preferably exclusively, of T units of the formulae PhSiO_{3/2}, PhSi(OR⁴)O_{2/2}, and PhSi(OR⁴)₂O_{1/2}, and T units of the formulae MeSiO_{3/2}, MeSi(OR⁴)O_{2/2}, and MeSi(OR⁴)₂O_{1/2}, and also, optionally, D units of the formulae Me₂SiO_{2/2} and Me₂Si(OR⁴)O_{1/2}, where Me is the methyl radical, Ph is the phenyl radical, and R⁴ is the methyl, ethyl, or butyl radical, preferably the methyl radical. The molar ratio of phenylsilicone to methylsilicone units is between 0.5 and 2.0. The amount of D units in these silicone resins is preferably below 10 wt %.

Additionally, in preferred examples of silicone resins (E), the sum of T units of the formulae PhSiO_{3/2}, PhSi(OR⁴)O_{2/2}, and PhSi(OR⁴)₂O_{1/2} accounts for more than 90wt% of all units of silicone resins (E), preferably more than 95wt%, More preferably 99 wt% or more, where Ph is the phenyl radical and R⁴ is the methyl, ethyl, or butyl radical, preferably the methyl radical, calculated on the basis of all units of silicone resin (E) as 100wt%.

The silicone resins (E) preferably possess a number-average molar mass Mₙ of at least 400 g/mol and more preferably of at least 600 g/mol. The average molar mass Mₙ is preferably not more than 400,000 g/mol, more preferably not more than 100,000 g/mol, most preferably not more than 50,000 g/mol. The silicone resins (E) may be either solid or liquid at 23° C. and 1000 hPa, with liquid silicone resins being preferred.

The silicone resins (E) may be used either in pure form or in the form of a solution in a suitable solvent.

However, it is preferable to use silicone resin (E) that does not contain an organic solvent.

Catalysts (F) used in the compositions (M) of the invention may be any desired catalysts known to date for compositions that cure through silane condensation.

Metal-containing curing catalysts (F) are selected from organic titanium and tin compounds, preferably selected from the group consists of titanic esters, tetrabutyl titanate, tetrapropyl titanate, tetraisopropyl titanate, titanium tetraacetylacetonate; dibutyltin dilaurate, dibutyltin maleate, dibutyltin diacetate, dibutyltin dioctanoate, dibutyltin acetylacetonate, dibutyltin oxides, and corresponding dioctyltin compounds.

Metal-free curing catalysts (F) are selected from basic compounds, preferably selected from the group consists of triethylamine, tributylamine, 1,4-diazabicyclo[2.2.2]octane, 1,5-diazabicyclo[4.3.0]non-5-ene, 1,8-diazabicyclo[5.4.0]undec-7-ene, N,N-bis(N,N-dimethyl-2-amino-ethyl)methylamine, pentamethylguanidine, tetramethylguanidine and further guanidine derivatives, N,N-dimethylcyclohexylamine, N,N-dimethylphenylamine and N-ethylmorpholine.

It is likewise possible to use, as catalyst (F), acidic compounds, for example phosphoric acid and esters thereof, toluenesulfonic acid, sulfuric acid, nitric acid, or else organic carboxylic acids, for example acetic acid and benzoic acid.

If the compositions (M) of the invention contain catalysts (F), the amounts are preferably less than or equal to 1 parts by weight, more preferably less than or equal to 0.1 parts by weight, more preferably less than or equal to 0.01 parts by weight, based on 100 parts by weight of component (A) in each case. Preferably the compositions (M) of the invention does not contain catalysts (F).

If the compositions (M) of the invention comprise adhesion promoters (G), the adhesion promoters (G) may be any desired adhesion promoters described to date for systems that cure through silane condensation.

Examples of adhesion promoters (G) are epoxysilanes such as glycidoxypropyltrimethoxysilane, glycidoxypropylmethyldimethoxysilane, glycidoxypropyltriethoxysilane or glycidoxypropyl-methyldiethoxysilane, 2-(3-triethoxysilylpropyl)maleic anhydride, N-(3-trimethoxysilylpropyl)urea, N-(3-triethoxysilylpropyl)urea, N-(trimethoxysilylmethyl)urea, N-(methyl-dimethoxysilylmethyl)urea, N-(3-triethoxysilylmethyl)urea, N-(3-methyldiethoxysilylmethyl)urea, O-(methylcarbamatomethyl)-methyldimethoxysilane, O-(methylcarbamatomethyl)trimethoxysilane, O-(ethylcarbamatomethyl)methyl diethoxysilane, O-(ethyl-carbamatomethyl)-triethoxysilane, 3-methacryloyloxypropyltrimethoxysilane, methacryloyloxymethyltrimethoxysilane, methacryloyloxymethylmethyldimethoxysilane, methacryloyloxy-methyltriethoxysilane, methacryloyloxymethylmethyldiethoxy-silane, 3-acryloyloxypropyltrimethoxysilane, acryloyloxymethyl-trimethoxysilane, acryloyloxymethylmethyldimethoxysilane, acryloyloxymethyltriethoxysilane and acryloyloxymethyl-methyldiethoxysilane, and the partial condensates thereof.

If the compositions (M) of the invention comprise adhesion promoters (G), the amounts are preferably lower than or equal to 3 parts by weight, more preferably lower than or equal to 1.5 parts by weight, based on 100 parts by weight of compositions (M) in each case.

The water scavengers (H) used in the compositions (M) of the invention may be any desired water scavengers described for systems that cure through silane condensation.

Examples of water scavengers (H) are silanes such as vinyltrimethoxysilane, vinyltriethoxysilane, vinylmethyl-dimethoxysilane, O-(methylcarbamatomethyl) methyl dimethoxysilane, O-(methylcarbamatomethyl)trimethoxysilane, O-(ethyl-carbamatomethyl) methyldiethoxysilane, and also O-(ethyl-carbamatomethyl)triethoxysilane, and/or the partial condensates thereof, and also orthoesters, such as 1,1,1-trimethoxyethane, 1,1,1-triethoxyethane, trimethoxymethane and triethoxymethane.

If the compositions (M) of the invention comprise water scavengers (H), the amounts are less than or equal to 1 part by weight, more preferably less than or equal to 0.1 parts by weight, based on 100 parts by weight of compositions (M) in each case. The compositions of the invention preferably do not comprise water scavengers (H).

If the compositions (M) of the invention comprise the unreactive plasticizers (I), the unreactive plasticizers (I) may be any desired plasticizers that are known to date and are typical of silane-crosslinking systems.

Unreactive plasticizers (I) are selected from the group consists of phthalic esters (dioctyl phthalate, diisooctyl phthalate and diundecyl phthalate), perhydrogenated phthalic esters (diisononyl cyclohexane-1,2-dicarboxylate and dioctyl cyclohexane-1,2-dicarboxylate), adipic esters (dioctyl adipate), benzoic esters, glycol esters, esters of saturated alkanediols (2,2,4-trimethylpentane-1,3-diol monoisobutyrate and 2,2,4-trimethylpentane-1,3-diol diisobutyrate), phosphoric esters, sulfonic esters, polyesters, polyethers (polyethylene glycols and polypropylene glycols preferably having molar masses Mₙ of 400 to 10 000 g/mol), polystyrenes, polybutadienes, polyisobutylenes, methyl dimethicone, phenyl dimethicone, trifluoromethyl dimethicone, hydroxy dimethicone, mineral oil, paraffinic hydrocarbons and high molecular weight branched hydrocarbons.

Preferably, the unreactive plasticizer (I) is selected from group consisting of polyoxypropylene monohydric alcohol, polyoxypropylene glycol, polyoxyethylene monohydric alcohol, polyoxyethylene glycol, polyoxypropylene-polyoxyethylene block copolymer, polyether polyols and terminal modification of the above.

The amount of any non-reactive plasticizer (I) in the composition (M) of the present invention is less than 1wt%, preferably less than 0.5wt%, more preferably less than 0.1wt%; based on the component (A) silane-crosslinking polymer calculated at 100wt%. The composition (M) of the present invention preferably does not contain any non-reactive plasticizer (I).

Additives (J) used in the compositions (M) of the invention may be any desired typical additives useful in silane-crosslinking systems.

The additives (J) used in accordance with the invention are preferably antioxidants, UV stabilizers, for example what are called HALS compounds, fungicides and pigments.

If the compositions (M) of the invention contain additives (J), the amounts are preferably 0.01 to 30 parts by weight, more preferably 0.1 to 10 parts by weight, based on 100 parts by weight of components (A) in each case. The compositions (M) of the invention preferably contain additives (J).

The admixtures (K) used in accordance with the invention are preferably tetraalkoxysilanes, for example tetraethoxysilane, and/or partial condensates thereof, reactive plasticizers, rheology additives, flame retardants and organic solvents.

Preferred reactive plasticizers (K) are compounds containing alkyl chains having 6 to 40 carbon atoms and having a group reactive toward the compounds (A1)/(A2). Examples are isooctyltri-methoxysilane, isooctyltriethoxysilane, N-octyltrimethoxy-silane, N-octyltriethoxysilane, decyltrimethoxysilane, decyltriethoxysilane, dodecyltrimethoxysilane, dodecyltriethoxysilane, tetradecyltrimethoxysilane, tetradecyltriethoxysilane, hexadecyltrimethoxysilane and hexadecyltriethoxysilane.

The rheology additives (K) are preferably polyamide waxes, hydrogenated castor oils or stearates.

Examples of organic solvents (K) are low molecular weight ethers, esters, ketones, aromatic and aliphatic and optionally halogenated hydrocarbons and alcohols, preference being given to the latter.

The dosage of admixtures (K) is less than 1 parts by weight, preferably less than 0.1 parts by weight, based on 100 parts by weight of components (A). Preferably admixtures (K) are added to the compositions (M) of the invention.

The compositions (M) of the invention are moisture-curing, meaning that they are preferably liquid or pasty compositions which cure on contact with water and/or atmospheric humidity.

The use of the compositions (M) in curable composition.

The composition (M) of the present invention can be cured under room temperature conditions and has a suitable pot life. The pot life is shorter than 10 hours, preferably shorter than 5 hours.

The compositions of the invention (M) can be produced in any manner known per se, for instance by standard methods and mixing processes for production of moisture-curing compositions.

The present invention further provides a process for producing the compositions (M) of the invention by mixing the individual components in any desired sequence.

Preferably, the catalytically active components (C) and/or (F) are not added until the end of the mixing operation.

This mixing operation can be affected at room temperature, i.e. at temperatures between 0 and 30° C, and pressure of the surrounding atmosphere, i.e. about 900 to 1100 hPa. If desired, this mixing can alternatively be affected at higher temperatures, for example at temperatures in the range from 30 to 130° C. In addition, it is possible to mix intermittently or constantly under reduced pressure, for example at absolute pressures of 30 to 500 hPa, in order to remove volatile compounds and/or air.

The mixing operation of the invention is preferably affected with exclusion of moisture.

The process of the invention can be performed continuously or batchwise.

The compositions (M) of the invention are one-component compositions which are storable with exclusion of water and crosslinkable at room temperature on ingress of water. The compositions (M) of the invention are preferred to be one-component compositions.

Alternatively, the compositions (M) of the invention are one part of two-component crosslinking systems, in which OH-containing compounds, such as water, are added in a second component.

The compositions (M1)/(M2) of the invention is two-component crosslinking system, wherein the weight ratio of the first component to the second component is (1-50):1, preferably between (1-30):1, more preferably (1-8):1 or (20-30):1, more preferably (3-7):1 or (25-30):1.

The first component contains: the composition (M1)/(M2) of the present invention,

The second component contains: a catalyst (F) and an OH compound, wherein the OH compound includes water, preferably the OH compound is water.

In some cases, the second component could contain the composition (M1)/(M2) of the present invention or component (A1)/(A2).

The water content in the compositions (M1)/(M2) of the invention is 0.01-10 parts by weight, preferably 0.01-5 parts by weight, more preferably 0.01-1 parts by weight, or 0.2, 0.3, 0.4, 0.6, 0.7, 0.8, 0.9, 2, 3, 4 parts by weight, based on 100 parts by weight of components (A).

A condensation type coating could be produced by crosslinking the above composition (M1)/(M2).

The typical water content of air is sufficient for the crosslinking of the compositions (M) of the invention. The compositions (M) of the invention are preferably crosslinked at room temperature. They can, if desired, also be crosslinked at higher or lower temperatures than room temperature, for example at -5 to 15° C. or at 30 to 50° C. and/or by means of concentrations of water exceeding the normal water content of the air.

Preference is given to conducting the crosslinking at a pressure of 100 to 1100 hPa, especially under the pressure of the surrounding atmosphere, i.e. about 900 to 1100 hPa.

In the examples described hereinafter, all the viscosities are at a temperature of 25° C. Unless stated otherwise, the examples which follow are conducted at a pressure of the surrounding atmosphere, i.e. at about 1000 hPa, and at room temperature, i.e. at about 23° C., or at a temperature which is established on combination of the reactants at room temperature without additional heating or cooling, and at a relative air humidity of about 50%. In addition, all figures for parts and percentages, unless stated otherwise, are based on weight.

### Embodiments

silicone resin 1, containing T unit and phenyl, Mw 1000-2000 g/mol, viscosity 250-350 mm²/s; belongs to component (E) silicone resin,
silicone resin 2, containing T unit, methyl and phenyl, Mw 1000-2000 g/mol, viscosity 250-350 mm²/s; belongs to component (E) silicone resin,
Sample (A1), a silane-crosslinking polymer, Polypropylene glycol with silane end capping at both ends and an average molar mass Mn of 8 000-20 000 g/mol and the formula -O-C(=O)-NH-(CH₂)-SiMe(OCH₃)₂ as end groups, belongs to Component (A) silane-crosslinking polymer,
Hydroxy silicone oil, dihydroxy terminated polydimethylsiloxane, kinematic viscosity at 25°C according to DIN 51562 about 50-110 mPa·s, hydroxyl content 1.6-2.2 wt%,
Above materials are provided by WACKER CHEMIE AG.

### Example of preparation method

### Preparation of a one-component mixture

The components listed in Table 1 were charged into a reaction vessel equipped with stirring, cooling and heating devices. At room temperature, mix the liquid material uniformly, and then add the powder material to the liquid material. But aminopropyltrimethoxysilane should be added last. Then remove the water and set aside for later use.

If necessary, the components in Table 1 can also be used to prepare a two-component mixture.

The raw materials and dosages in each example and comparative example are shown in Table 1.

**Table 1**

| | Ex.1 | Ex.2 | C.Ex.3 | C.Ex.4 | C.Ex.5 | C.Ex.6 |
|---|---|---|---|---|---|---|
| silicone resin 1 | 72.65 | | 72.65 | 67.11 | 54.75 | 23.45 |
| silicone resin 2 | | 72.65 | | | | |
| octyltriethoxysilane | | | | | | 49.11 |
| Sample (A1) | 21.35 | 21.35 | | 26.86 | 35 | 21.35 |
| Hydroxy silicone oil | | | 21.35 | | | |
| Composite light stabilizer | 0.8 | 0.8 | 0.8 | 0.8 | 0.8 | 0.8 |
| 3-Aminopropyltrimethoxysilane | 4 | 4 | 4 | 4 | 4 | 4 |
| 3-Glycidoxypropyltrimethoxysilane | 1 | 1 | 1 | 1 | 1 | 1 |
| defoamer | 0.2 | 0.2 | 0.2 | 0.2 | 0.2 | 0.2 |
| the weight ratio of component (E) silicone resin to component (A) silane-crosslinking polymer | 3.40 | 3.40 | -- | 2.50 | 1.56 | 1.10 |

The compositions of Table 1 were mixed and immediately tested according to DIN53019 using an Anton Paar MCR302 instrument to obtain the kinematic viscosity and static viscosity of the compositions of the present invention.

The compositions of the examples and comparative examples were applied on the surface of the ceramic tile, the coating thickness was 300µm, the side surface of the ceramic tile was rough porcelain, the surface of the ceramic tile was glaze, and the surface was hydrophilic. The coating was cured for 7 days at room temperature and 50% humidity. The hardness and water absorption of the cured product were tested according to GB/T 531.1-2008 and GB/T 19250-2013 respectively.

### Durability Test:

After curing for 7 days at room temperature and 50% humidity, the coated tile samples are soaked in 50°C water for 4 days, 7 days and 30 days. The appearance of the coating was observed respectively. No cracks, no blistering, and no bond failure were evaluated as "good".

**Table 2**

| | Ex.1 | Ex.2 | C.Ex.3 | C.Ex.4 | C.Ex.5 | C.Ex.6 |
|---|---|---|---|---|---|---|
| Viscosity mPa.s | 400 | 1041 | | 384 | 788 | 100 |
| Hardness Shore D | 48.5 | 35 | | 42 | 42 | 23 |
| Water Absorption rate | 0.10% | 0.19% | | 0.50% | 0.80% | 2.7% |
| Appearance of composition | clear | clear | White milky | clear | clear | clear |
| Turbidity NTU | 16.5 | | | | | |
| Appearance of the cured composition | transparent | transparent | broken coating | transparent | transparent | transparent |
| Durability Test 4days | good | good | | good | Poor: bond failure | Poor: bond failure |
| Durability Test 7days | good | medium little cracking | | good | Poor: bond failure | Poor: bond failure |
| Durability Test 30days | good | | | | Poor: bond failure | Poor: bond failure |

As it can be seen from Table 2, the hydroxy silicone oil was used in C.Ex.3 instead of component (A) the silane-crosslinking polymer of the present invention, and a transparent coating could not be obtained. Also, after the mixture was cured, the resulting coating film was broken and evaluated as poor in the durability test.

Compared to Ex.1, when the weight ratio of component (E) silicone resin to component (A) silane-crosslinking polymer in C.Ex.4 (or C.Ex.5) is 2.5 (or 1.56), the water absorption of the coating is higher, and the coating is prone to bond failure in durability tests.

## Claims

1. A composition (M), which contains
Component (A) silane-crosslinking polymer,
Optional component (C) an organosilicon compound that not having nitrogen atoms bonded directly to carbonyl groups,
component (E) silicone resin,
wherein, the weight ratio of component (E) silicone resin to component (A) silane-crosslinking polymer is greater than or equal to 3.2, preferably greater than or equal to 3.3, more preferably between 3.3-4.8,
wherein the dosage of the hydroxy silicone oil is less than 1 wt%, preferably less than 0.1 wt%, based on the total amount of the compositions (M) is calculated as 100wt%.

2. The composition (M) as described in claim 1, wherein dosage of component (E) silicone resin is greater than 50wt%, preferably between 55 and 90 wt%, more preferably between 60 and 85wt%, more preferably between 65 and 80wt%, more preferably between 65 and 75wt%, the total amount of all compositions (M) is calculated as 100wt%.

3. The composition (M) as described in claim 1 or 2, wherein the sum of the amount of component (A) silane-crosslinking polymer and component (E) silicone resin is greater than 80wt%, preferably between 85 and 99wt%, more preferably between 88 and 96wt%, based on the total amount of the compositions (M) is calculated as 100wt%.

4. The composition (M) as described in any one of claim 1-3, wherein component (A) silane-crosslinking polymers represented by the formula (1-1)
(HO)ₓ-Y-[O-CO-NH-(CR¹₂)_{b1}-SiRₐ(OR²)₃₋ₐ]₂₋ₓ (I-1)
wherein
Y is a divalent polymer radical,
R may be the same or different and is a monovalent, optionally substituted hydrocarbyl radical,
R¹ may be the same or different and is a hydrogen atom or a monovalent, optionally substituted hydrocarbyl radical,
R² may be the same or different and is a hydrogen atom or a monovalent, optionally substituted hydrocarbyl radical,
x is 0 or 1,
a may be the same or different and is 0, 1 or 2, preferably 0 or 1, more preferably 1, and
b1 is 1 or 3, preferably 1,
with the proviso that component (A) includes less than 15 mol%, preferably less than 10 mol%, more preferably less than 5 mol%, of polymers of the formula (1-1) with x=1.

5. The composition (M) as described in any one of claim 1-4, wherein component (E) silicone resin containing formula (II):
R³_{c}(R⁴O)_{d}SiO_{(4-c-d)/2} (II)
wherein
R³ can be the same or different, and represents a hydrogen atom or an optionally substituted monovalent hydrocarbon group bonded with SiC,
R⁴ may be the same or different and represents a hydrogen atom or an optionally substituted monovalent hydrocarbon group,
c is 0, 1, 2 or 3, and
d is 0, 1, 2 or 3,
wherein the sum of c+d is less than or equal to 3; and
c is equal to 0 or 1 in at least 50wt%, preferably 70wt%, more preferably 90wt% of the units of formula (II).

6. The composition (M) as described in any one of claim 1-5, which containing
10-25 parts Component (A) silane-crosslinking polymer,
0.1-10 parts Component (C) An organosilicon compound that not having nitrogen atoms bonded directly to carbonyl groups,
65-89 parts component (E) silicone resin,
the total amount of all compositions (M) is calculated as 100 parts.

7. Use of the composition (M) as described in any one of claim 1-6 in the field of construction, preferably in the field of concrete, natural stone, artificial stone, brick or tile protecting, more preferably in the waterproofing coating field of brick or tile, preferably in the waterproofing coating field of decorative brick or tile, more preferably in the waterproofing coating field of bricks or tiles with glazed or porcelain surfaces.

8. Use of the composition (M) as described in any one of claim 1-6 in the field of indoor waterproofing and/or roof waterproofing.

9. A method of construction, containing the steps of applying the composition (M) as described in any one of claim 1-6 on the surfaces and/or gaps of already laid bricks or tiles.

10. The construction method as described in claim 9, without the operation step of destroying the already laid bricks or tiles.

## Patentansprüche

1. Zusammensetzung (M), die Folgendes enthält:
Komponente (A), ein silanvernetzendes Polymer,
gegebenenfalls Komponente (C), eine Organosilicon-Verbindung, die keine direkt an Carbonylgruppen gebundene Stickstoffatome aufweist,
Komponente (E), ein Siliconharz,
wobei das Gewichtsverhältnis von Komponente (E), einem Siliconharz, zu Komponente (A), einem silanvernetzenden Polymer, größer als oder gleich 3,2, vorzugsweise größer als oder gleich 3,3, stärker bevorzugt zwischen 3,3-4,8, ist,
wobei die Dosierung des Hydroxysiliconöls weniger als 1 Gew.-%, vorzugsweise weniger als 0,1 Gew.-%, beträgt, bezogen auf die als 100 Gew.-% berechnete Gesamtmenge der Zusammensetzungen (M).

2. Zusammensetzung (M) gemäß der Beschreibung in Anspruch 1, wobei die Dosierung von Komponente (E), einem Siliconharz, mehr als 50 Gew.-%, vorzugsweise zwischen 55 und 90 Gew.-%, stärker bevorzugt zwischen 60 und 85 Gew.-%, stärker bevorzugt zwischen 65 und 80 Gew.-%, stärker bevorzugt zwischen 65 und 75 Gew.-%, beträgt, wobei die Gesamtmenge aller Zusammensetzungen (M) als 100 Gew.-% berechnet ist.

3. Zusammensetzung (M) gemäß der Beschreibung in Anspruch 1 oder 2, wobei die Summe der Menge von Komponente (A), einem silanvernetzenden Polymer, und Komponente (E), einem Siliconharz, mehr als 80 Gew.-%, vorzugsweise zwischen 85 und 99 Gew.-%, stärker bevorzugt zwischen 88 und 96 Gew.-%, beträgt, bezogen auf die Gesamtmenge der als 100 Gew.-% berechneten Zusammensetzungen (M).

4. Zusammensetzung (M) gemäß der Beschreibung in einem der Ansprüche 1-3, wobei Komponente (A), silanvernetzende Polymere, durch die Formel (I-1)
(HO)ₓ-Y-[O-CO-NH-(CR¹₂)_{b1}-SiRₐ(OR²)₃₋ₐ]₂₋ₓ (I-1)
veranschaulicht wird, wobei
Y ein zweiwertiger Polymerrest ist,
R gleich oder verschieden sein kann und ein einwertiger, gegebenenfalls substituierter Kohlenwasserstoffrest ist, R¹ gleich oder verschieden sein kann und ein Wasserstoffatom oder ein einwertiger, gegebenenfalls substituierter Kohlenwasserstoffrest ist,
R² gleich oder verschieden sein kann und ein Wasserstoffatom oder ein einwertiger, gegebenenfalls substituierter Kohlenwasserstoffrest ist,
x 0 oder 1 ist,
a gleich oder verschieden sein kann und 0, 1 oder 2, vorzugsweise 0 oder 1, stärker bevorzugt 1, ist und
b1 1 oder 3, vorzugsweise 1, ist,
mit der Maßgabe, dass Komponente (A) weniger als 15 Mol-%, vorzugsweise weniger als 10 Mol-%, stärker bevorzugt weniger als 5 Mol-%, Polymere der Formel (I-1) mit x=1 einschließt.

5. Zusammensetzung (M) gemäß der Beschreibung in einem der Ansprüche 1-4, wobei Komponente (E), ein Siliconharz, Formel (II):
R³_{c}(R⁴O)_{d}SiO_{(4-c-d)/2} (II)
enthält, wobei
R³ gleich oder verschieden sein kann und für ein Wasserstoffatom oder eine gegebenenfalls substituierte einwertige Kohlenwasserstoffgruppe steht, die an SiC gebunden ist,
R⁴ gleich oder verschieden sein kann und für ein Wasserstoffatom oder eine gegebenenfalls substituierte einwertige Kohlenwasserstoffgruppe steht,
c 0, 1, 2 oder 3 ist und
d 0, 1, 2 oder 3 ist,
wobei die Summe von c+d kleiner als oder gleich 3 ist; und
c in mindestens 50 Gew.-%, vorzugsweise 70 Gew.-%, stärker bevorzugt 90 Gew.-%, der Einheiten der Formel (II) gleich 0 oder 1 ist.

6. Zusammensetzung (M) gemäß der Beschreibung in einem der Ansprüche 1-5, die Folgendes enthält:
10-25 Teile Komponente (A), ein silanvernetzendes Polymer,
0,1-10 Teile Komponente (C), eine Organosilicon-Verbindung, die keine direkt an Carbonylgruppen gebundene Stickstoffatome aufweist,
65-89 Teile Komponente (E), ein Siliconharz,
wobei die Gesamtmenge aller Zusammensetzungen (M) als 100 Teile berechnet ist.

7. Verwendung der Zusammensetzung (M) gemäß der Beschreibung in einem der Ansprüche 1-6 auf dem Gebiet des Baus, vorzugsweise auf dem Gebiet von Beton, Naturstein, Kunststein, dem Ziegel- oder Fliesenschutz, stärker bevorzugt auf dem Gebiet der Abdichtungsbeschichtungen für Ziegel oder Fliesen, vorzugsweise auf dem Gebiet der Abdichtungsbeschichtungen für dekorative Ziegel oder Fliesen, stärker bevorzugt auf dem Gebiet der Abdichtungsbeschichtungen für Ziegel oder Fliesen mit glasierten oder Porzellanflächen.

8. Verwendung der Zusammensetzung (M) gemäß der Beschreibung in einem der Ansprüche 1-6 auf dem Gebiet der Innenraumabdichtung und/oder der Dachabdichtung.

9. Bauverfahren, das die Schritte des Auftragens der Zusammensetzung (M) gemäß der Beschreibung in einem der Ansprüche 1-6 auf die Flächen und/oder Fugen von bereits gemauerten Ziegeln oder verlegten Fliesen umfasst.

10. Bauverfahren gemäß der Beschreibung in Anspruch 9 ohne den Arbeitsschritt des Zerstörens der bereits gemauerten Ziegel oder verlegten Fliesen.

## Revendications

1. Composition (M), qui contient
composant (A) polymère à réticulation silane,
composant éventuel (C) un composé organosilicium qui n'a pas d'atomes d'azote liés directement à des groupes carbonyle,
composant (E) résine de silicone,
dans laquelle le rapport pondéral du composant (E) résine de silicone sur le composant (A) polymère à réticulation silane est supérieur ou égal à 3,2, de préférence supérieur ou égal à 3,3, plus préférablement compris entre 3,3 et 4,8,
dans laquelle le dosage de l'huile de silicone hydroxylée est inférieur à 1 % en poids, de préférence inférieur à 0,1 % en poids, sur la base de la quantité totale des compositions (M) qui est calculée comme étant 100 % en poids.

2. Composition (M) telle que décrite dans la revendication 1, dans laquelle le dosage du composant (E) résine de silicone est supérieur à 50 % en poids, de préférence entre 55 et 90 % en poids, plus préférablement entre 60 et 85 % en poids, plus préférablement entre 65 et 80 % en poids, plus préférablement entre 65 et 75 % en poids, la quantité totale de toutes les compositions (M) est calculée comme étant 100 % en poids.

3. Composition (M) telle que décrite dans la revendication 1 ou 2, dans laquelle la somme de la quantité du composant (A) polymère à réticulation silane et du composant (E) résine de silicone est supérieure à 80 % en poids, de préférence entre 85 et 99 % en poids, plus préférablement entre 88 et 96 % en poids, sur la base de la quantité totale des compositions (M) qui est calculée comme étant 100 % en poids.

4. Composition (M) telle que décrite dans l'une quelconque des revendications 1 à 3, dans laquelle le composant (A) polymères à réticulation silane représentés par la formule (I-1)
(HO)ₓ-Y-[O-CO-NH-(CR¹₂)_{b1}-SiRₐ(OR²)₃₋ₐ]₂₋ₓ (I-1)
dans laquelle
Y est un radical de polymère divalent,
R peut être identique ou différent et est un radical hydrocarbyle monovalent, éventuellement substitué,
R¹ peut être identique ou différent et est un atome d'hydrogène ou un radical hydrocarbyle monovalent, éventuellement substitué,
R² peut être identique ou différent et est un atome d'hydrogène ou un radical hydrocarbyle monovalent, éventuellement substitué,
x est 0 ou 1,
a peut être identique ou différent et est 0, 1 ou 2, de préférence 0 ou 1, plus préférablement 1, et
b1 est 1 ou 3, de préférence 1,
à la condition que le composant (A) comprenne moins de 15 % en moles, de préférence moins de 10 % en moles, de préférence moins de 5 % en moles, de polymères de la formule (I-1) avec x = 1.

5. Composition (M) telle que décrite dans l'une quelconque des revendications 1 à 4, dans laquelle le composant (E) résine de silicone contenant la formule (II) :
R³_{c}(R⁴O)_{d}SiO_{(4-c-d)/2} (II)
dans laquelle
R³ peut être identique ou différent et représente un atome d'hydrogène ou un groupe hydrocarboné monovalent éventuellement substitué lié à SiC,
R⁴ peut être identique ou différent et représente un atome d'hydrogène ou un groupe hydrocarboné monovalent éventuellement substitué,
c est 0, 1, 2 ou 3, et
d est 0, 1, 2 ou 3,
dans laquelle la somme de c+d est inférieure ou égale à 3 ; et
c est égal à 0 ou 1 dans au moins 50 % en poids, de préférence 70 % en poids, plus préférablement 90 % en poids des motifs de formule (II).

6. Composition (M) telle que décrite dans l'une quelconque des revendications 1 à 5, qui contient
10 à 25 parties de composant (A) polymère à réticulation silane,
0,1 à 10 parties de composant (C) un composé organosilicium qui n'a pas d'atomes d'azote liés directement à des groupes carbonyle,
65 à 89 parties de composant (E) résine de silicone,
la quantité totale de toutes les compositions (M) est calculée comme 100 parties.

7. Utilisation de la composition (M) telle que décrite dans l'une quelconque des revendications 1 à 6 dans le domaine de la construction, de préférence dans le domaine de la protection du béton, de la pierre naturelle, de la pierre artificielle, de la brique ou de la tuile, plus préférablement dans le domaine du revêtement imperméabilisant à l'eau de la brique ou de la tuile, préférablement dans le domaine du revêtement imperméabilisant à l'eau de la brique ou de la tuile décorative, plus préférablement dans le domaine du revêtement imperméabilisant à l'eau de briques ou de tuiles à surfaces vitrées ou en porcelaine.

8. Utilisation de la composition (M) telle que décrite dans l'une quelconque des revendications 1 à 6 dans le domaine de l'imperméabilisation à l'eau d'intérieur et/ou de l'imperméabilisation à l'eau de toit.

9. Procédé de construction, comprenant les étapes d'application de la composition (M) telle que décrite dans l'une quelconque des revendications 1 à 6 sur les surfaces et/ou les espaces de briques ou de tuiles déjà posées.

10. Procédé de construction telle que décrite dans la revendication 9, sans l'étape opératoire de destruction des briques ou tuiles déjà posées.
